# FASCICULE DE BREVET EUROPEEN

(11) **EP 3 713 512 B1**
(45) Date de publication et mention de la délivrance du brevet: **08.05.2024**
(21) Numéro de dépôt: 18804016.6
(22) Date de dépôt: 23.11.2018
(51) Int. Cl.: A61C 13/00

(54) **PROCÉDÉ DE FABRICATION D'UN ENSEMBLE DE RESTAURATION DENTAIRE PROVISOIRE**
VERFAHREN ZUR HERSTELLUNG EINER VORLÄUFIGEN ZAHNERSATZANORDNUNG
METHOD FOR PRODUCING A PROVISIONAL DENTAL RESTORATION ASSEMBLY

(30) Priorité: 24.11.2017 FR 1761183
(43) Date de publication de la demande: 30.09.2020
(73) Titulaire: Euroteknika, 74700 Sallanches (FR)
(72) Inventeur: LANCIEUX, Cédric, 74120 Megève (FR)
(74) Mandataire: Novaimo
(86) Numéro de dépôt international: PCT/EP2018/082337
(87) Numéro de publication internationale: WO 2019/101905

(56) Documents cités:
- WO-A1-2016/066516
- KR-B1- 101 452 849
- US-A1- 2014 080 092

## Description

La présente invention se rapporte à un procédé de fabrication d'un ensemble de restauration dentaire destiné à être fixé au niveau d'une de ses extrémités sur un implant dentaire intégré à une structure osseuse d'un individu.

La restauration dentaire permet de réaliser une dentition artificielle à un patient partiellement ou totalement édenté. Elle repose sur l'intégration d'un ou plusieurs implants dans la structure osseuse, pratiquée par une incision de la gencive afin d'atteindre la structure osseuse et de la percer. Ensuite, un élément de cicatrisation d'un ensemble de restauration dentaire provisoire est en général fixé sur un implant et cet ensemble reste intouché jusqu'à solidarisation de l'implant dans la structure osseuse par ostéointégration et cicatrisation de la gencive autour de l'élément de cicatrisation. La restauration dentaire peut être finalisée par la fixation d'un pilier de restauration sur l'implant, sur lequel est fixée une prothèse dentaire définitive. Le pilier et la prothèse dentaire sont personnalisés, adaptés à l'anatomie du patient et à la dent à remplacer, pour atteindre un résultat aussi proche que possible de la dentition naturelle idéale. Pour cela, le volume précis de l'espace à restaurer est en général pris en compte, par une prise d'empreinte, qui permet la fabrication personnalisée de la prothèse dentaire définitive.

Dans l'état de la technique, les méthodes existantes de restauration dentaire se heurtent à tout ou partie des problèmes techniques suivants :
- dans de nombreux procédés existants, une nouvelle intervention sur la gencive est réalisée après sa cicatrisation suite à la pause d'implant, pour réaliser l'empreinte, matérielle ou numérique, de l'espace à restaurer, tout en ayant une vue de l'implant et de la gencive pour prendre en compte précisément l'ensemble de cette géométrie, dans le but de fabriquer un pilier et une prothèse de formes précises : cette approche est naturellement traumatisante ;
- d'autres procédés existants limitent ce traumatisme en utilisant des composants de cicatrisation qui ne sont pas retirés lors d'une prise d'empreinte, pour ne pas heurter la gencive : en contrepartie, ces procédés utilisent des éléments cicatrisants particuliers, en général de forme sensiblement cylindrique et en tous cas standardisée, et intégrant parfois des indicateurs et/ou plusieurs composants complémentaires pour permettre la prise en compte de tout ou partie de la géométrie au-dessus de l'implant, sans y avoir totalement accès par une prise d'empreinte. Ces méthodes moins traumatisantes présentent alors d'autres inconvénients, de complexité et/ou de moins bonne optimisation de la phase de cicatrisation ;
- une implémentation avantageuse du principe mentionné ci-dessus est décrite dans le document WO2016066516. Dans cette implémentation, des composants de cicatrisation de forme anatomique et standardisée sont utilisés, permettant une meilleure optimisation de la phase de cicatrisation. Un composant de cicatrisation est alors choisi parmi une collection de composants de cicatrisation de formes variées pour définir au mieux la forme de cicatrisation de la gencive la plus adaptée à la prothèse dentaire définitive. Toutefois, devant la diversité des anatomies dentaires existantes, un composant de cicatrisation, même de forme anatomique, n'est pas parfaitement adapté à chaque situation. Par exemple, des cas particuliers d'implants particulièrement inclinés ne peuvent pas être gérés par une telle approche. Cette limitation est d'autant plus grande qu'il n'existe qu'un nombre restreint de modèles standardisés de composants de cicatrisation, pour faciliter leur reconnaissance automatique lors de la phase de restauration dentaire, et ne pas trop compliquer les aspects logistiques de production, stockage, etc.
Le document US2014/080092 décrit un procédé de restauration dentaire permettant de concevoir une prothèse dentaire définitive en reproduisant ou en corrigeant la géométrie d'une prothèse dentaire provisoire, cette dernière étant réalisée avant la pose d'un implant et avant que la dent délabrée ne soit retirée.

Ainsi, un objet général de l'invention consiste en procédé de fabrication d'un ensemble de restauration dentaire qui ne comprend pas tout ou partie des inconvénients de l'état de la technique.

Plus précisément, un premier objet de l'invention est une solution de restauration dentaire qui minimise le traumatisme du patient lors du procédé de restauration dentaire.

Un second objet de l'invention est une solution de restauration dentaire qui permet une restauration la plus adaptée possible à l'anatomie du patient.

Un troisième objet de l'invention est une solution de restauration dentaire la plus universelle possible, adaptée à tout implant et toute restauration.

Un quatrième objet de l'invention est une solution de restauration dentaire la plus simple possible.

Un cinquième objet de l'invention est un procédé de fabrication d'un ensemble de restauration dentaire la plus esthétique possible.

A cet effet, l'invention repose sur un procédé de fabrication d'un ensemble de restauration dentaire provisoire destiné à être fixé au niveau d'une de ses extrémités sur un implant dentaire intégré à une structure osseuse d'un individu, caractérisé en ce qu'il comprend :
- une première étape de prise d'une première empreinte numérique d'un espace buccal de l'individu, destiné à accueillir l'ensemble de restauration dentaire provisoire, et
- une deuxième étape de construction d'un premier modèle tridimensionnel virtuel d'un ensemble de restauration dentaire provisoire d'après la première empreinte numérique, et
- une troisième étape de construction d'une base de données comprenant des données numériques définissant le premier modèle tridimensionnel virtuel et une donnée d'identification de l'individu pour lequel l'ensemble de restauration dentaire provisoire réel correspondant au premier modèle tridimensionnel virtuel est destiné à être posé en bouche.

La première étape de prise d'une première empreinte numérique comprend la prise d'une empreinte d'un espace buccal au-dessus d'un implant

La base de données peut comprendre des données numériques de plusieurs premiers modèles tridimensionnel virtuels d'ensembles de restauration dentaire provisoires, chacun étant associé à une donnée d'identification, et chaque premier modèle tridimensionnel de la base de données peut être conçu sur mesure et être unique, distinct des autres premiers modèles tridimensionnels de la base de données.

Le procédé de fabrication comprend une quatrième étape de fabrication de l'ensemble de restauration dentaire provisoire réel à partir du premier modèle tridimensionnel virtuel, par transmission des données numériques correspondantes à un dispositif de fabrication par enlèvement de matière et/ou par addition de matière.

L'ensemble de restauration dentaire provisoire peut comprendre un élément de cicatrisation pour gencive et/ou une prothèse dentaire.

L'ensemble de restauration dentaire provisoire peut être monobloc ou constitué par l'assemblage de plusieurs éléments, notamment comprenant une embase de pilier destinée à être fixée d'une part à l'implant et d'autre part à un capuchon de cicatrisation ou à une prothèse dentaire, et/ou notamment comprenant un capuchon de cicatrisation et une prothèse amovible ou un élément de numérisation monté de manière amovible ou non sur ledit capuchon de cicatrisation.

L'ensemble de restauration dentaire provisoire peut comprendre une zone de cicatrisation dont une section transverse présente une forme trapézoïdale ou polygonale.

Il est aussi exposé un procédé de fabrication d'un ensemble de restauration dentaire définitif pour un individu, caractérisé en ce qu'il met en oeuvre un procédé de fabrication d'un ensemble de restauration dentaire provisoire tel que décrit précédemment, et :
- optionnellement une cinquième étape de saisie d'une donnée d'identification de l'individu et de lecture dans la base de données des données numériques du premier modèle tridimensionnel correspondant à l'ensemble de restauration dentaire provisoire porté par l'individu ;
- une sixième étape de prise d'une deuxième empreinte numérique de l'espace buccal de l'individu au niveau de son ensemble de restauration dentaire provisoire fixé sur un implant, conservé en bouche pendant ladite deuxième empreinte numérique de l'espace buccal, et
- une septième étape de détermination de l'espace buccal à restaurer, y compris l'espace non directement visible incluant le positionnement et l'orientation dudit implant dentaire, à partir de la deuxième empreinte numérique et du premier modèle tridimensionnel, et
- une huitième étape de construction d'un deuxième modèle tridimensionnel d'un ensemble de restauration dentaire définitif, prenant en compte l'espace buccal à restaurer établi à l'étape précédente.

La sixième étape de prise d'une deuxième empreinte numérique de l'espace buccal peut comprendre la prise d'empreinte avec un élément de prise d'empreinte fixé de manière amovible sur l'ensemble de restauration dentaire provisoire.

La septième étape de détermination de l'espace buccal à restaurer peut comprendre :
- superposition du premier modèle tridimensionnel virtuel sur le modèle de restauration dentaire provisoire numérisé ; et
- déduction de l'espace buccal non directement visible, incluant le positionnement et l'orientation de l'implant et sur lequel est fixé l'ensemble de restauration dentaire provisoire et la partie transmuqueuse.

Le procédé de fabrication peut comprendre une neuvième étape de fabrication de tout ou partie de l'ensemble de restauration dentaire définitif d'après le deuxième modèle tridimensionnel.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 est un logigramme représentant un procédé de fabrication d'un ensemble de restauration dentaire selon un mode de réalisation de l'invention.
Les figures 2 à 5 illustrent des étapes de numérisation d'un espace buccal dans une première phase d'un procédé de fabrication d'un ensemble de restauration dentaire selon un mode de réalisation de l'invention.
Les figures 6 à 9 illustrent des étapes de conception d'un ensemble de restauration dentaire provisoire d'un procédé de fabrication d'un ensemble de restauration dentaire selon le mode de réalisation de l'invention.
Les figures 10 et 11 illustrent des étapes de fabrication d'un ensemble de restauration dentaire provisoire d'un procédé de fabrication d'un ensemble de restauration dentaire selon le mode de réalisation de l'invention.
Les figures 12 et 13 illustrent le résultat obtenu après installation d'un ensemble de restauration dentaire provisoire obtenu par un procédé de fabrication d'un ensemble de restauration dentaire selon le mode de réalisation de l'invention.
La figure 14 illustre des étapes de numérisation d'un espace buccal dans une deuxième phase d'un procédé de fabrication d'un ensemble de restauration dentaire définitif.
Les figures 15 à 18 illustrent des étapes de fabrication d'un ensemble de restauration dentaire définitif d'un procédé de fabrication d'un ensemble de restauration dentaire.
Les figures 19 et 20 illustrent des étapes de fabrication d'un ensemble de restauration dentaire définitif d'un procédé de fabrication d'un ensemble de restauration dentaire.
La figure 21 représente une vue en perspective éclatée d'un ensemble de restauration dentaire provisoire dans une variante d'un procédé de fabrication d'un ensemble de restauration dentaire selon le mode de réalisation de l'invention.
La figure 22 illustre une vue en coupe d'un ensemble de restauration dentaire provisoire fixé en bouche selon la variante de réalisation de l'invention.
La figure 23 représente une vue de la section d'une zone de cicatrisation d'un ensemble de restauration dentaire provisoire selon le mode de réalisation de l'invention.
La figure 24 illustre une vue en coupe d'un ensemble de restauration dentaire provisoire fixé en bouche selon une autre variante de réalisation de l'invention.
La figure 25 représente une vue en perspective d'un élément de cicatrisation selon l'autre variante du mode de réalisation de l'invention.
Les figures 26 à 39 illustrent des étapes de fabrication d'un ensemble de restauration dentaire selon une variante du mode de réalisation de l'invention.

Pour simplifier la description, les mêmes références suivies d'un « ' » seront utilisées pour désigner des éléments virtuels par rapport à des éléments réels correspondants. Ces éléments virtuels seront définis par des données numériques, et représentés sur un écran d'une interface homme machine d'un ordinateur mettant en oeuvre le procédé de l'invention.

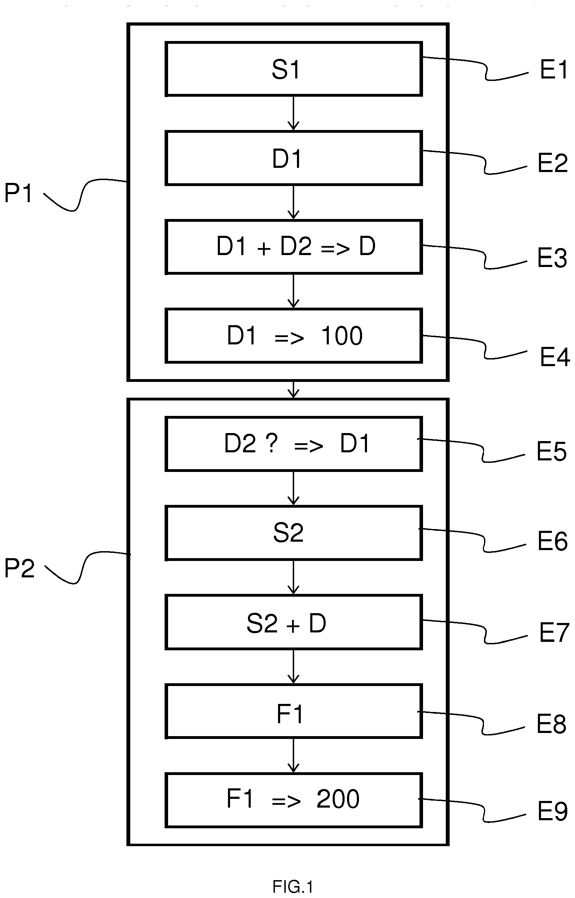

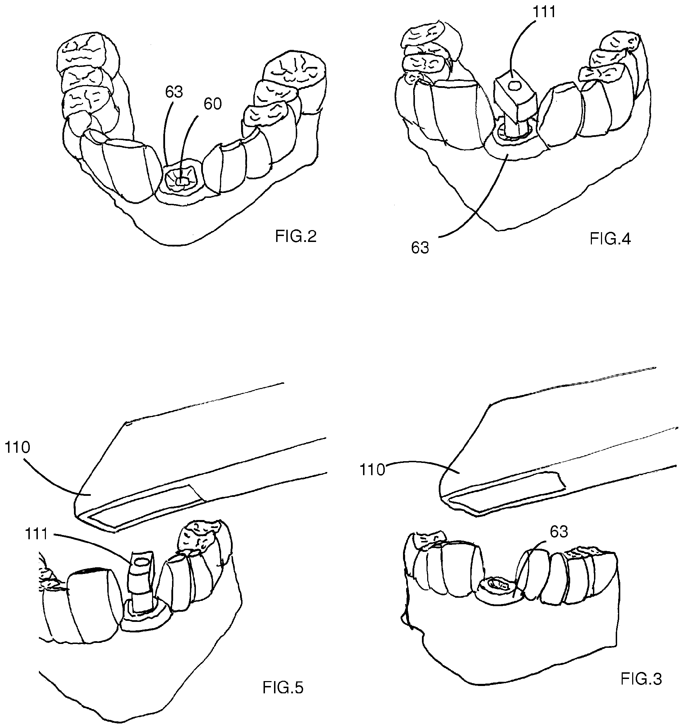

L'invention va être illustrée à partir de la description d'un procédé de fabrication d'un ensemble de restauration dentaire, qui sera parfois plus simplement appelé procédé de restauration dentaire, schématiquement représenté par la figure 1 et détaillé par les figures 2 à 20. Ce procédé comprend deux phases P1, P2 : une première phase P1 dite de cicatrisation durant laquelle un ou plusieurs implant(s) sont intégrés dans la structure osseuse du patient par ostéointégration, et durant laquelle un ensemble de restauration dentaire provisoire est conçu « sur-mesure », fabriqué puis mis en place sur le ou les implants, puis une seconde phase P2 de restauration en tant que telle, durant laquelle un ensemble de restauration dentaire définitif, conçu de même « sur-mesure », est fabriqué puis mis en place sur le ou les implants, en remplacement de l'ensemble de restauration provisoire. Durant la première phase P1 du procédé se déroule donc une période de cicatrisation, lors de laquelle la gencive cicatrise, et durant laquelle au moins un implant se soude à l'os par un phénomène d'ostéointégration. Ce procédé de restauration dentaire nécessite finalement la mise en oeuvre d'un procédé de fabrication d'un ensemble de restauration dentaire définitif, cet ensemble étant fixé sur au moins un implant durant la deuxième phase du procédé de restauration dentaire.

Nous allons à présent détailler le procédé de restauration dentaire.

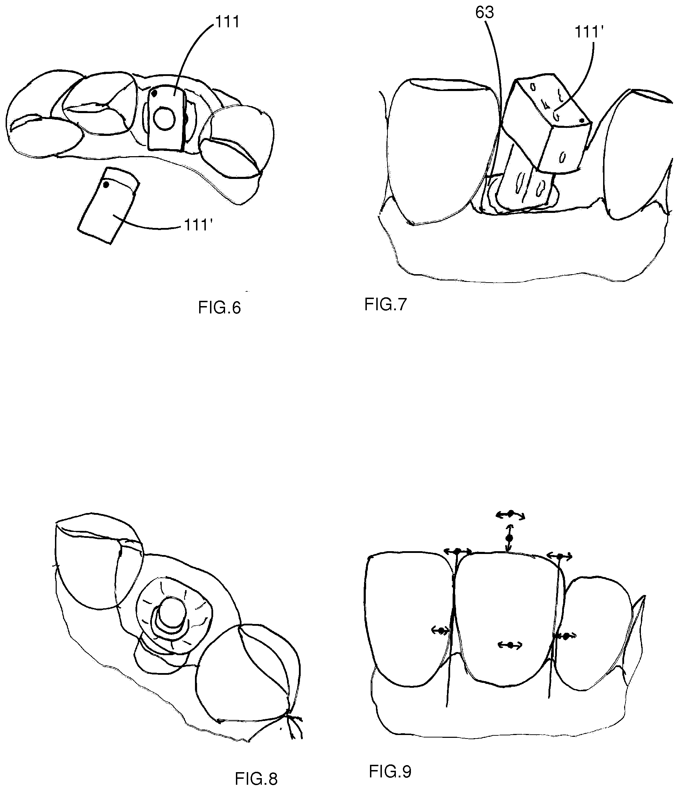

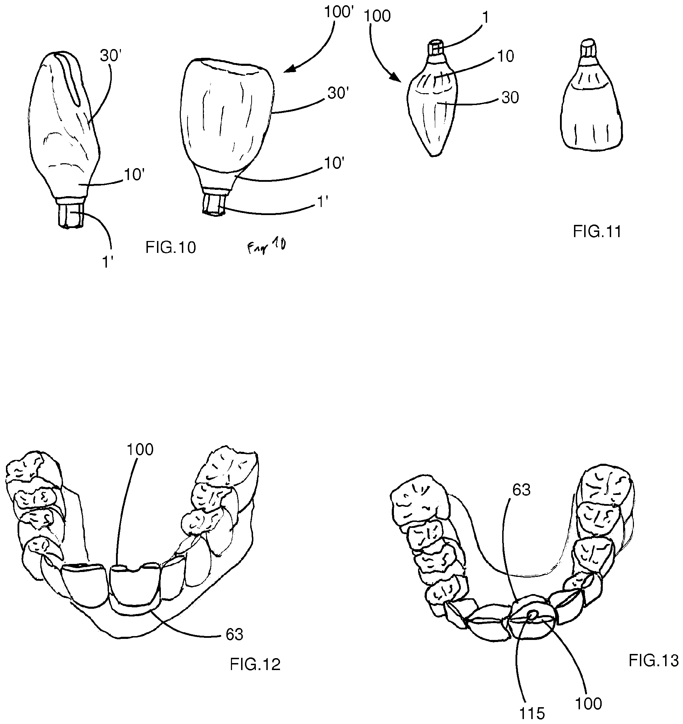

La première phase P1 du procédé de restauration dentaire comprend principalement quatre étapes :
- une première étape E1 de prise d'au moins une première empreinte numérique S1 d'un espace buccal destiné à accueillir un ensemble de restauration dentaire provisoire 100, représentée par les figures 3 à 7 ;
- une deuxième étape E2 de construction d'un premier modèle tridimensionnel D1 de tout ou partie de l'ensemble de restauration dentaire provisoire 100 d'après la première empreinte numérique S1, représentée par les figures 8 et 9 ;
- une troisième étape E3 de construction d'un fichier numérique ou base de données D comprenant le premier modèle tridimensionnel D1 et une donnée d'identification D2 associée, représentée par la figure 10 ; et
- une quatrième étape E4 de fabrication de l'ensemble de restauration dentaire provisoire 100 d'après le premier modèle tridimensionnel D1, représentée par la figure 11.

Il est particulièrement intéressant de noter que la première phase P1 du procédé de restauration dentaire comprend ainsi la fabrication « sur-mesure » d'un ensemble de restauration dentaire provisoire, parfaitement adapté à la géométrie buccale d'un patient.

La première étape E1 peut être effectuée directement à l'issue d'une étape préalable de pose d'un implant, dont le résultat est illustré par la figure 2.

La première étape E1 de prise d'empreinte numérique S1 est obtenue par tout appareil comme un scanner buccal 110 par exemple. La première empreinte numérique S1 comprend une représentation du volume buccal dans lequel l'ensemble de restauration dentaire provisoire va s'intégrer. Elle est obtenue par une numérisation du profil de la gencive 63, représentée par la figure 3, complétée par une numérisation du même espace, réalisée après vissage sur l'implant d'un composant de prise d'empreinte numérique 111, comme représenté par les figures 4 et 5. L'espace buccal numérisé concerne donc le volume laissé libre par le ou les dents à remplacer, après son ou leur retrait. La numérisation permet donc de détecter et numériser la gencive et les dents voisines. Cet espace buccal est aussi réalisé après avoir déjà positionné le ou les implants. La numérisation permet ainsi de numériser un volume précis agencé au-dessus d'un implant déjà positionné en bouche.

La figure 6 représente l'image obtenue par la numérisation de la zone buccale à restaurer avec ce composant de prise d'empreinte 110. La figure 7 consiste à superposer un composant de prise d'empreinte virtuel 111', provenant d'une bibliothèque numérique, dont les dimensions correspondent au composant de prise d'empreinte 111 réel utilisé lors de la numérisation représentée en figure 5 durant la première étape E1. Cette superposition de composant est réalisée virtuellement, à l'aide de l'assistance d'une interface homme machine, par exemple par l'identification manuelle de trois points particuliers identiques sur le composant de prise d'empreinte virtuel 111' et sur l'image du composant de prise d'empreinte réel 111 correspondant sur l'écran de l'interface homme machine. Cette opération permet de déduire la position et l'orientation de l'implant 60, ainsi que l'espace transmuqueux caché au sein de la gencive, non directement visible par la numérisation du seul espace buccal de la figure 3.

Finalement, la première étape E1 permet donc de déterminer le positionnement et/ou la forme de l'implant 60, et/ou le positionnement et/ou la forme de la gencive 63, et/ou le positionnement et/ou la forme d'au moins une dent adjacente ou en vis-à-vis de l'ensemble de restauration dentaire provisoire 100. La première empreinte numérique S1 est transmise automatiquement à un ordinateur doté d'un logiciel de restauration dentaire, qui gère l'interface homme machine et les opérations susmentionnées d'un opérateur.

Le logiciel, assisté ou non par un praticien, peut alors concevoir un premier modèle tridimensionnel D1 de tout ou partie de l'ensemble de restauration dentaire provisoire, dans la deuxième étape E2 du procédé, comme illustré par les figures 8 à 10, puisqu'il connait parfaitement la géométrie de l'espace buccal à restaurer autour de l'implant 60. Cet ensemble de restauration dentaire provisoire peut prendre plusieurs formes et comprendre un ou plusieurs éléments, comme cela sera détaillé par la suite. Dans le mode de réalisation décrit et représenté, cet ensemble, représenté par la figure 11, est monobloc et comprend un pilier 1 pour sa fixation sur un implant dans sa partie inférieure, une zone de cicatrisation 10 dans sa partie intermédiaire et une prothèse provisoire 30 en partie haute, s'approchant de la forme d'une dent réelle. Le modèle tridimensionnel D1 de l'ensemble de restauration dentaire provisoire correspond donc à une représentation numérique, conçue sur-mesure pour s'intégrer parfaitement à l'espace buccal libre du patient, depuis l'implant, au sein de la gencive et entre une ou des dents adjacentes ou en en vis-à-vis. La figure 10 correspond à une représentation graphique des données numériques du premier modèle tridimensionnel D1, cette représentation correspondant donc à l'ensemble de restauration dentaire provisoire 100' virtuel

Ensuite, le procédé met en oeuvre la troisième étape E3 qui comprend l'élaboration d'une base de données D, ou plus généralement d'une mémorisation de données numériques dans une mémoire électronique, qui comprend notamment les données numériques définissant le premier modèle tridimensionnel D1 décrit ci-dessus, associées à une donnée d'identification D2 permettant de faire le lien avec l'individu concerné par la restauration dentaire. Cette donnée d'identification peut comprendre par exemple un nom de la personne concernée, et/ou un numéro d'identification de cette personne, comme par exemple un numéro de sécurité sociale. La base de données D peut comprendre d'autres données, comme un numéro de dent à soigner dans la mâchoire de la personne, suivant une convention donnée. En remarque, la base de données D peut être enregistrée dans une mémoire de l'ordinateur ou bien sur un serveur de données distant, connecté à l'ordinateur.

De plus, la base de données D peut également comprendre une identification du type d'ensemble de restauration dentaire provisoire, et/ou du type de certains éléments standards utilisés dans l'ensemble de restauration dentaire provisoire. Enfin, le fichier numérique D peut également comprendre un modèle tridimensionnel de la forme et/ou de la position d'au moins une dent adjacente ou en vis-à-vis de l'ensemble de restauration dentaire et/ou toute information utile au praticien concernant la restauration de cette dent. Ces données pourront en tout ou partie être utilisées dans le procédé de fabrication de l'ensemble de restauration dentaire provisoire et/ou de l'ensemble de restauration dentaire définitif.

Enfin, le procédé met en oeuvre une quatrième étape E4 de fabrication de l'ensemble de restauration dentaire provisoire 100 réel correspondant au premier modèle tridimensionnel D1, à partir des données numériques de la base de données D. Pour cette fabrication, l'ordinateur peut transmettre le fichier de données numériques correspondant au premier modèle tridimensionnel D1 à un dispositif de fabrication, capable de lire ce fichier et de lancer automatiquement la fabrication correspondante, par enlèvement de matière, par exemple à l'aide d'un dispositif d'usinage, ou par addition de matière. L'ensemble de restauration dentaire provisoire 100 obtenu, représenté sur la figure 11, après d'éventuelles opérations complémentaires de finition, de type polissage par exemple, est ensuite fixé sur l'implant 60.

Le résultat obtenu est représenté par les figures 12 et 13. L'ensemble de restauration dentaire provisoire 100 est fixé sur l'implant 60 par l'intermédiaire d'une vis 115 traversant une ouverture intérieure centrale sur toute sa longueur. Cet ensemble a pour fonction d'induire la cicatrisation de la gencive autour de sa zone de cicatrisation 10, et de former une dent provisoire par la prothèse 30 imitant la forme d'une dent, formant ainsi un aspect esthétique à cette restauration temporaire, provisoire. Cet ensemble de restauration dentaire provisoire 100 étant conçu sur mesure, sa fonction de cicatrisation et sa fonction esthétique sont mises en oeuvre de manière optimale pour chaque personne traitée, quelle que soit sa configuration buccale.

Outre les avantages décrits précédemment, l'ensemble de restauration dentaire provisoire permet la mise en oeuvre de la seconde phase P2 de restauration dentaire durant laquelle un ensemble de restauration dentaire définitif est conçu, fabriqué et mis en place avec une traumatisation minimale de la gencive 63.

La seconde phase P2 du procédé de restauration dentaire, mise en oeuvre après une période de cicatrisation de la gencive 63 et/ou l'ostéointégration de l'implant 60, comprend principalement les étapes suivantes:
- une cinquième étape d'identification E5 de l'ensemble de restauration dentaire provisoire 100 présent en bouche. Elle peut se faire par un identifiant lié à la personne traitée. Cette étape comprend finalement l'identification d'au moins une donnée du fichier numérique D, qui permet d'obtenir le premier modèle tridimensionnel D1 correspondant à l'ensemble de restauration dentaire provisoire 100 de la personne ;
- une sixième étape de prise d'une deuxième empreinte E6 numérique S2 de l'espace buccal comprenant l'ensemble de restauration dentaire provisoire 100 fixé dans un implant 60 ;
- une septième étape de détermination E7 de l'espace buccal, comprenant la détection du positionnement et de l'orientation de l'implant 60, d'après la deuxième empreinte numérique S2 et les données numériques de l'ensemble de restauration dentaire provisoire 100 associé à la donnée d'identification D2, et donc à l'individu concerné par la restauration dentaire. En remarque, cette détermination est réalisée sans retirer l'élément de restauration dentaire provisoire, ce qui limite le traumatisme pour le patient ;
- une huitième étape de construction E8 d'un deuxième modèle tridimensionnel F1 de tout ou partie de l'ensemble de restauration dentaire définitif, d'après les informations obtenues par les étapes précédentes ;
- et une neuvième étape de fabrication E9 de l'ensemble de restauration dentaire définitif à partir du deuxième modèle tridimensionnel F1.

Lors de l'étape d'identification E5, un praticien indique une donnée d'identification de la personne concernée, par une interface homme machine, qui sera comparée à un ensemble de données d'identification contenues dans la base de données D. Concrètement, le praticien peut, par exemple, saisir le nom du patient (ou son numéro de sécurité sociale). Cette donnée d'identification engendre une recherche parmi les données d'identification D2 mémorisées lors de la première phase P1 du procédé, ce qui permet l'accès au premier modèle tridimensionnel D1 contenant les données numériques relatives à l'ensemble de restauration dentaire provisoire 100 de la personne concernée.

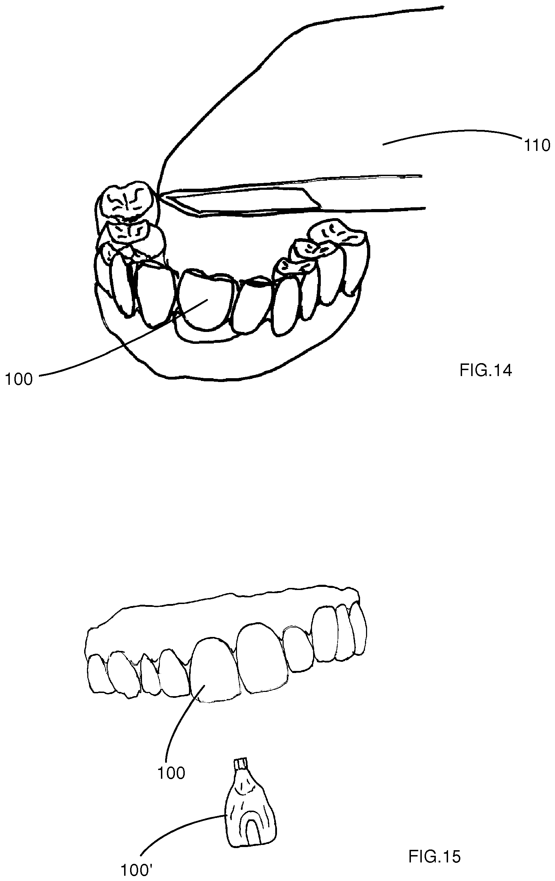

La sixième étape E6, représentée par la figure 14, comprend la prise d'une empreinte numérique S2, par exemple obtenue par tout appareil comme un scanner buccal 110 par exemple. Cette deuxième empreinte numérique S2 comprend une représentation du volume buccal dans lequel l'ensemble de restauration dentaire définitif va s'intégrer. En remarque, cette étape est réalisée avec la présence de l'ensemble de restauration provisoire 100. Cette deuxième empreinte numérique S2 est proche de la première empreinte numérique S1 réalisée dans la première phase P1 et pourrait presque être facultative. Elle est toutefois fortement conseillée puisqu'elle permet de prendre en compte la nouvelle forme de la gencive 63 après cicatrisation, et un éventuel déplacement de l'ensemble.

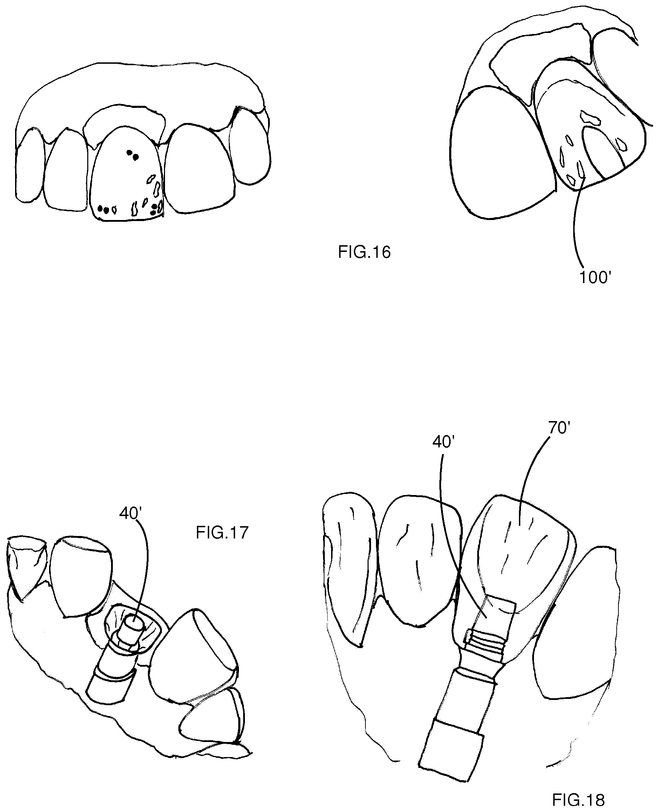

La figure 15 représente l'image obtenue sur un écran par la numérisation S2 de la zone buccale à restaurer, ainsi qu'un ensemble de restauration dentaire provisoire 100` virtuel, correspondant au premier modèle tridimensionnel D1 identifié à l'étape précédente. La suite du procédé, représentée par la figure 16, comprend une étape E7 de détermination de la zone non directement visible de l'espace buccal.

Selon ce mode de réalisation, cette étape consiste à superposer l'ensemble de restauration dentaire provisoire 100' virtuel sur l'image de l'ensemble de restauration dentaire provisoire 100 réel numérisé. Cette superposition de composants est réalisée virtuellement, à l'aide de l'assistance d'une interface homme machine, par exemple par l'identification manuelle de trois points particuliers identiques sur l'image numérisée et sur le composant virtuel.

Après le bon positionnement de l'ensemble de restauration dentaire provisoire 100` virtuel, la connaissance précise de sa forme extérieure permet, par un calcul automatique par un logiciel du système de restauration, de déduire des informations utiles sur la zone non directement visible de l'espace buccal par la deuxième numérisation S2, incluant notamment la position et l'orientation de l'implant 60 sur lequel est fixé l'ensemble de restauration dentaire provisoire 100, ainsi que la partie transmuqueuse, c'est à dire l'espace caché au sein de la gencive autour de la zone de cicatrisation dudit ensemble de restauration dentaire provisoire 100. A la fin de cette septième étape E7, la zone buccale à restaurer est parfaitement connue, par l'association d'une part des données numériques de la deuxième empreinte numérique S2, et/ou de la première empreinte numérique S1, qui suffisent à fournir les informations sur l'espace visible, et d'autre part des données numériques obtenues indirectement à partir du premier modèle tridimensionnel D1 mémorisé, comme explicité ci-dessus, qui complète les informations par l'apport des informations sur l'espace non directement visible, jusqu'à l'implant.

En variante de réalisation, un logiciel pourrait réaliser de manière autonome et automatique la superposition des composants, sans assistance d'un opérateur.

Dans une huitième étape E8, lorsque le logiciel de restauration a déterminé avec exactitude l'espace buccal à restaurer, y compris les parties non directement visibles allant jusqu'au positionnement et l'orientation de l'implant, il déduit de ces connaissances la géométrie finale de l'ensemble de restauration dentaire définitif à fabriquer, qui doit être fixé à l'implant et occuper tout le volume gingival, puis la géométrie de la prothèse dentaire définitive destinée à imiter l'aspect esthétique de la dent manquante. L'ensemble de restauration dentaire définitif doit naturellement rétablir au mieux la fonction de la dent manquante, particulièrement la mastication, ainsi que son aspect extérieur. A l'issue de cette huitième étape E8, on dispose d'un deuxième modèle tridimensionnel F1 d'un ensemble de restauration dentaire définitif. Cet ensemble de restauration dentaire peut comprendre des éléments standards et des éléments sur-mesure tels qu'une prothèse dentaire définitive.

En remarque, ce procédé de restauration peut se faire totalement numériquement, donc virtuellement, et/ou de manière totalement automatique ou de préférence par l'intermédiaire avec l'assistance d'un praticien, exploitant son savoir-faire par l'intermédiaire d'une interface homme machine, tel qu'illustré par les figures 17 et 18. Dans cet exemple de restauration dentaire, un pilier 40 définitif destiné à une fixation dans l'implant 60 est défini, puis la prothèse dentaire ou couronne 70 définitive, destinée à une fixation sur ce pilier 40, est dessiné et virtuellement définie.

En variante, cette construction de la restauration définitive peut comprendre des phases de construction d'une maquette en plastique ou plâtre. Dans ce dernier cas, une empreinte physique, par exemple en silicone, peut être réalisée, ou une empreinte automatiquement fabriquée depuis les données numériques obtenues de l'espace buccal. Un plâtre peut être coulé dans l'empreinte pour créer le maître modèle, c'est à dire une réplique de l'arcade dentaire à restaurer, qui est ensuite utilisée pour partie de restauration traditionnelle. En fin de cette étape, le modèle de restauration définitive éventuellement fabriqué est numérisé.

Dans tous les cas, l'étape E8 permet l'obtention de données numériques correspondant à un deuxième modèle tridimensionnel F1 d'un ensemble de restauration dentaire définitif.

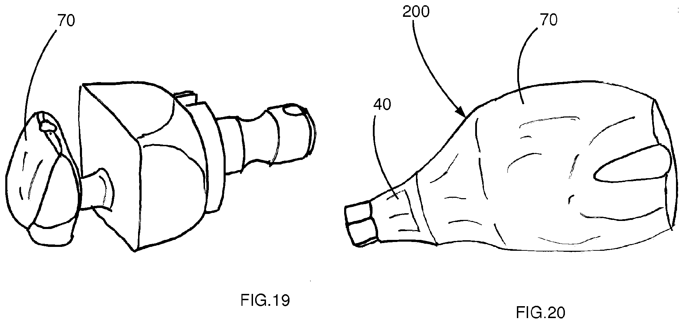

Enfin, le procédé met en oeuvre une neuvième étape de fabrication E9 de l'ensemble de restauration dentaire définitif 200 réel, à partir du fichier de données numériques correspondant au deuxième modèle tridimensionnel F1. Pour cette fabrication, l'ordinateur peut transmettre le fichier de données numériques correspondant à un dispositif de fabrication, capable de lire ce fichier et de lancer automatiquement la fabrication correspondante, par enlèvement de matière, par exemple à l'aide d'un dispositif d'usinage, ou par addition de matière. La figure 19 représente à titre d'exemple la réalisation de la couronne 70 à partir de l'usinage d'un bloc de matière de forme initiale parallélépipédique. La figure 20 illustre l'ensemble de restauration dentaire définitif 200 obtenu, après assemblage de la couronne 70 et du pilier 40.

Finalement, il ressort de cette deuxième phase du procédé que la restauration est faite avec un traumatisme minimal. En effet, la fabrication de l'ensemble de restauration dentaire définitif 200 est réalisé sans retrait temporaire de l'ensemble de restauration dentaire provisoire, sans heurter la cicatrisation encore fragile de la gencive. De plus, comme l'ensemble de restauration dentaire provisoire a été conçu sur mesure, la cicatrisation de la gencive est réalisée selon une forme la plus anatomique possible, la plus proche de la restauration finale, ce qui permet une continuité de cicatrisation et/ou d'adhésion de la gencive 63 sans heurt autour de l'ensemble de restauration définitif 200.

Le procédé de restauration dentaire met donc en oeuvre un procédé de fabrication d'un ensemble de restauration dentaire, qui se décompose de deux phases P1, P2.

La phase P1 est en soi essentielle et importante. Elle met en oeuvre un procédé de fabrication d'un ensemble de restauration dentaire provisoire destiné à être fixé au niveau d'une de ses extrémités sur un implant dentaire intégré à une structure osseuse d'un individu, qui comprend les étapes suivantes :
- une première étape E1 de prise d'une première empreinte numérique S1 d'un espace buccal destiné à accueillir l'ensemble de restauration dentaire provisoire, et
- une deuxième étape E2 de construction d'un premier modèle tridimensionnel D1 virtuel d'un ensemble de restauration dentaire provisoire d'après la première empreinte numérique S1, et
- une troisième étape E3 de construction d'une base de données D comprenant des données numériques définissant le premier modèle tridimensionnel D1 et une donnée d'identification D2 de l'individu pour lequel l'ensemble de restauration dentaire provisoire réel correspondant au premier modèle tridimensionnel D1 est destiné à être posé en bouche.

En ajoutant la deuxième phase P2 du procédé, il est exposé un procédé de fabrication d'un ensemble de restauration dentaire définitif 200 mettant en oeuvre les étapes suivantes :
- une cinquième étape E5 de saisie d'une donnée d'identification D2 de l'individu et de lecture dans la base de données D des données numériques du premier modèle tridimensionnel D1 correspondant à l'ensemble de restauration dentaire provisoire 100 ;
- une sixième étape E6 de prise d'une deuxième empreinte numérique S2 de l'espace buccal de l'individu au niveau de son ensemble de restauration dentaire provisoire fixé sur un implant 60, conservé en bouche, et
- une septième étape E7 de détermination de l'espace buccal à restaurer, y compris l'espace non directement visible incluant le positionnement et l'orientation dudit implant 60 dentaire, à partir de la deuxième empreinte numérique S2 et du premier modèle tridimensionnel D1, et
- une huitième étape E8 de construction d'un deuxième modèle tridimensionnel F1 d'un ensemble de restauration dentaire définitif 200, prenant en compte l'espace buccal à restaurer établi à l'étape précédente.

L'invention porte aussi sur un dispositif de restauration dentaire, mettant en oeuvre tout ou partie des étapes de fabrication d'un ensemble de restauration dentaire décrit précédemment.

Un tel dispositif de restauration dentaire comprend une unité centrale de traitement et de commande, comprenant ici au moins un microprocesseur, lié à une mémoire électronique, sur lequel est exécuté un logiciel qui permet la mise en oeuvre de tout ou partie des étapes du procédé de restauration décrit ci-dessus. Cette unité centrale est liée par un dispositif de communication à un module d'obtention de données numériques représentant tout ou partie d'une dentition d'un patient, qui peut consister en un appareil comme un scanner buccal et/ou à un serveur de données distant. Elle est aussi liée à une interface homme machine, comprenant par exemple un écran et/ou un clavier, pour permettre les échanges avec un praticien, comme explicité ci-dessus. L'unité centrale réalise ensuite tous les traitements nécessaires, calculs et autres, par un moyen logiciel. Elle est enfin apte à générer et transmettre des commandes de fabrication à un dispositif de fabrication d'un ensemble de restauration dentaire, notamment de composants comme un pilier de restauration et/ou une prothèse. Elle peut être liée à un dispositif de fabrication par enlèvement de matière, comme une machine d'usinage, ou par addition de matière, comme une imprimante 3D. Le dispositif de fabrication peut être apte à fabriquer tout ou partie de l'ensemble de restauration dentaire provisoire et/ou tout ou partie de l'ensemble de restauration dentaire définitif.

Naturellement, l'invention ne se limite pas à l'ensemble de restauration dentaire provisoire décrit dans le mode de réalisation précédent. Cet ensemble peut être monobloc ou se présenter en plusieurs composants distincts assemblés.

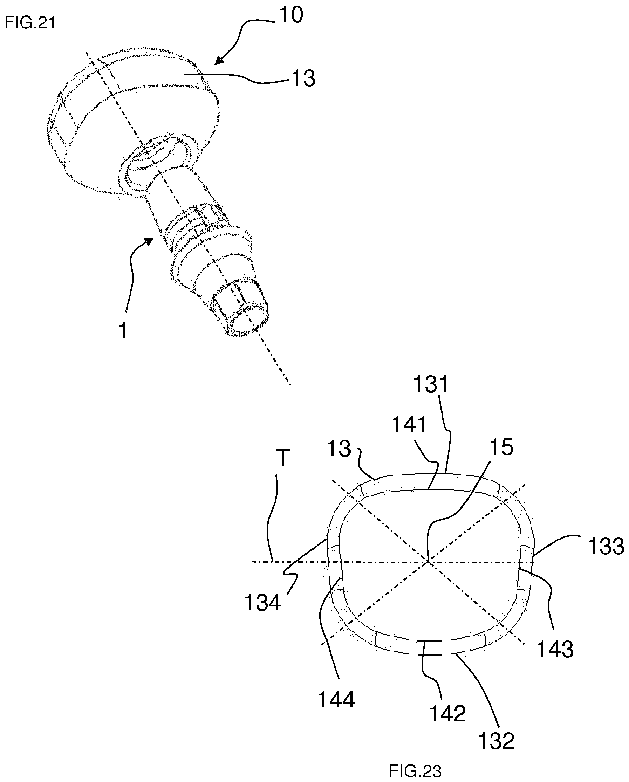

Notamment, l'ensemble de restauration dentaire provisoire peut comprendre un premier composant ou embase de pilier 1, et un élément de cicatrisation 10 distinct destiné à un assemblage sur le pilier 1. Cet élément de cicatrisation peut se présenter sous la forme d'un capuchon de cicatrisation, dont la forme se restreint sensiblement au volume gingival, pour se limiter à la fonction de cicatrisation. Un tel capuchon comprend ainsi une partie émergente de faible volume. Un exemple d'une telle construction est représenté par la figure 21.

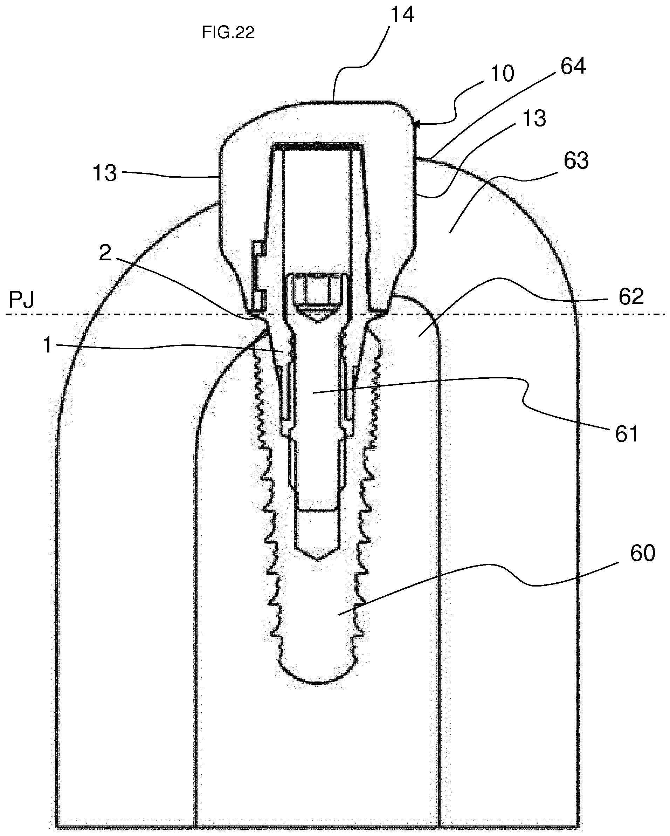

Dans cet exemple, le capuchon ou élément de cicatrisation 10 a pour fonction de venir se loger au sein de la gencive incisée, après fixation d'un implant, par fixation, de préférence amovible, sur une embase de pilier connectée à l'implant. La configuration finale est représentée sur la figure 22. Dans cette configuration, l'implant 60 est solidarisé à la partie osseuse 62, l'embase de pilier 1 est fixée sur l'implant 60, de sorte que sa collerette 2 se trouve positionnée au niveau de la frontière entre la partie osseuse 62 et la gencive 63. Le capuchon 10 recouvre l'embase de pilier 1 jusqu'à la collerette 2, de sorte que la gencive 63 est presque exclusivement en contact avec le capuchon 10. L'ensemble formé par l'assemblage d'un capuchon sur une embase de piler correspond ainsi à un ensemble de cicatrisation, qui participe temporairement au procédé de restauration, permettant la cicatrisation et la fabrication sans heurt de la prothèse définitive, comme cela sera détaillé par la suite.

La gencive 63 se cicatrise donc autour d'une surface latérale 13 du capuchon 10. Pour cela, cette surface latérale 13 est conçue pour correspondre au mieux au milieu buccal du patient. En particulier, quelle que soit l'orientation ou la position de l'implant dans la partie osseuse 62, un capuchon sur-mesure pourra être parfaitement adapté à la forme de la gencive et à la forme de la ou des dents adjacentes ou en vis-à-vis. Un tel capuchon est donc unique car correspondant à l'anatomie propre du patient.

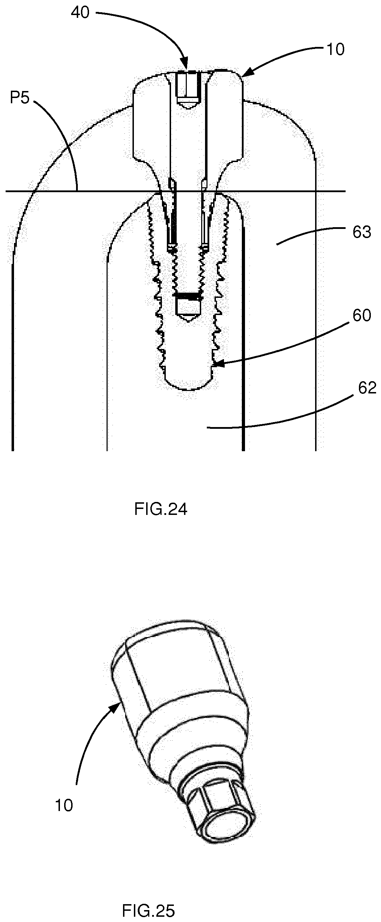

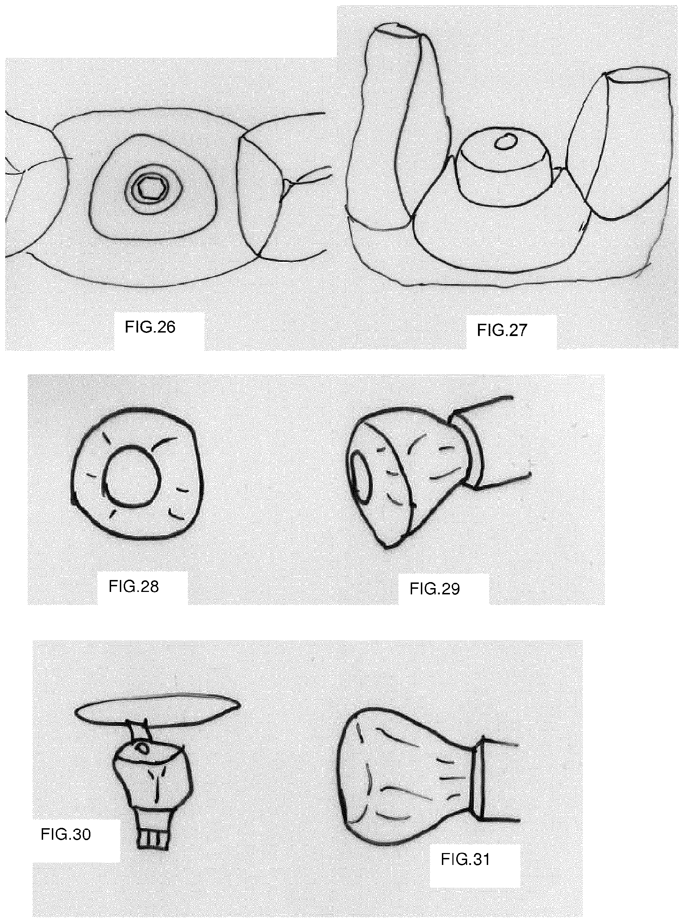

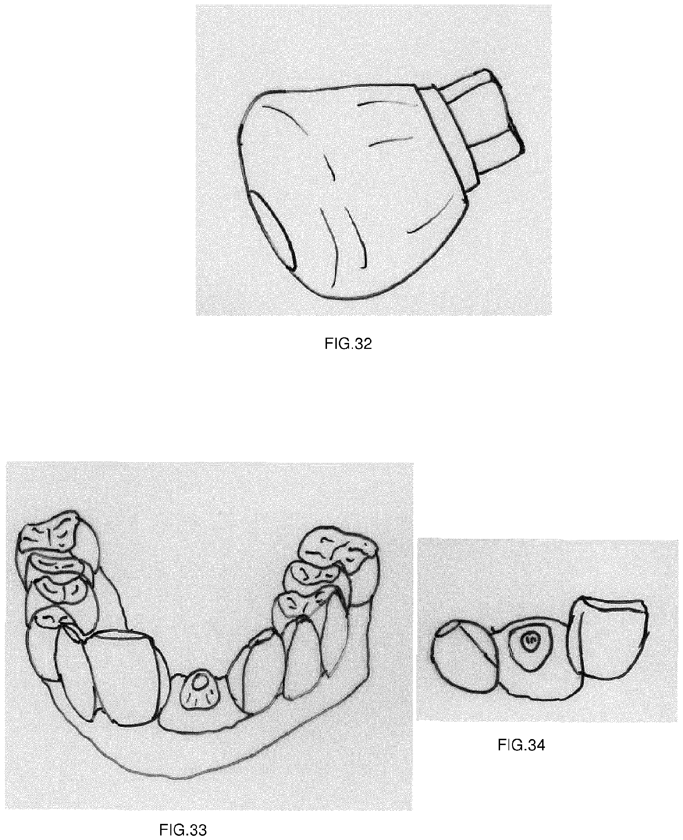

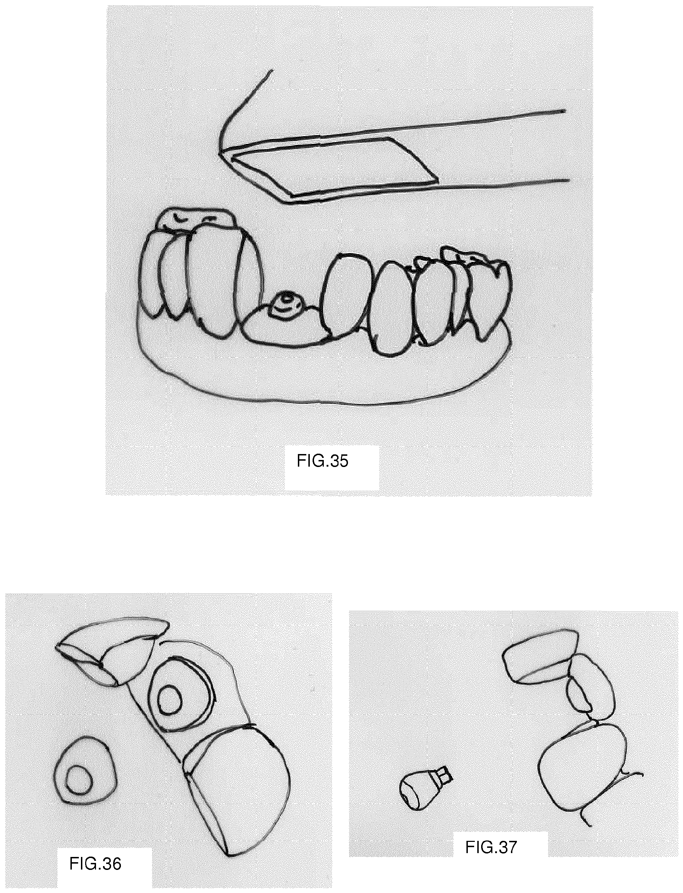

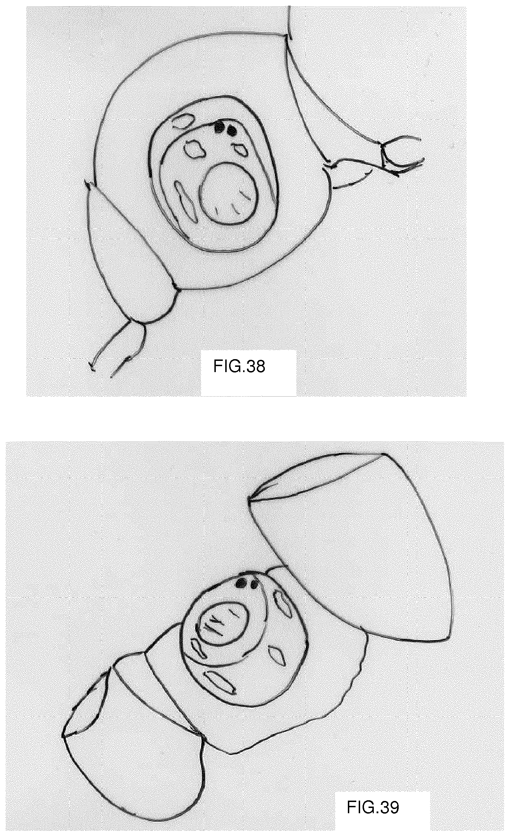

La figure 24 illustre une variante de réalisation de la figure 22, dans laquelle l'élément de cicatrisation 10 est un capuchon monobloc, aussi appelé pilier de cicatrisation. Cet élément de cicatrisation 10 intègre l'embase de pilier 1 de la figure 22, comprend ainsi une connectique lui permettant une fixation directe sur un implant 60. Cet élément de cicatrisation est représenté seul en perspective de dessous sur la figure 25. De plus, les figures 26 à 39 illustrent de manière schématique des étapes du procédé de fabrication d'un ensemble de restauration dentaire, similaires au procédé décrit de manière détaillée précédemment mais sur la base d'un élément de cicatrisation 10 tel que représentée sur la figure 25.

En remarque, dans ce document, une dent adjacente désigne une dent positionnée sur la même mâchoire et directement à côté de la dent à restaurer et une dent en vis-à-vis désigne une dent de la mâchoire opposée, susceptible de venir contre la dent à réparer lorsque la mâchoire est fermée. La surface terminale 14 supérieure du capuchon est destinée à rester visible au-dessus de la surface gingivale 64 de la gencive 63, puisque la gencive reste intégralement en contact avec la surface latérale 13 du capuchon. En remarque, la partie haute de la surface latérale 13 et la surface terminale 14 forment donc une surface émergente du capuchon.

Selon une autre variante non illustrée, un capuchon de cicatrisation, aussi appelé pilier de cicatrisation, est directement fixé sur l'implant 60, sans l'utilisation d'une embase de pilier intermédiaire. Le capuchon de cicatrisation comprend alors une ouverture centrale, alignée avec l'axe de l'implant, au travers de laquelle passe une vis maintenant le capuchon de cicatrisation sur l'implant. Un tel élément de cicatrisation est alors monobloc, c'est-à-dire qu'il est constitué d'une seule pièce et de préférence à partir d'un unique matériau.

Selon une autre variante non illustrée, un capuchon de cicatrisation d'un ensemble de restauration dentaire provisoire pourrait comprendre un dispositif de connexion dans sa partie supérieure, adaptée pour la liaison amovible d'un composant de numérisation du type de celui représenté en figure 4, pour sa fixation amovible sur le capuchon de cicatrisation lors de la sixième étape de la deuxième numérisation S2 en début de deuxième phase P2 du procédé de restauration dentaire. Il pourrait aussi en variante comprendre un dispositif de connexion dans sa partie supérieure, adaptée pour la liaison amovible d'une prothèse provisoire 60 ou définitive 70.

De même, l'ensemble de restauration dentaire définitif peut présenter une autre architecture que celle décrite précédemment, en une ou plusieurs pièces. De plus, rien n'exclut de conserver une partie des composants de l'ensemble de restauration dentaire provisoire dans l'ensemble de restauration dentaire définitif.

Le procédé comprend un élément logiciel qui permet de concevoir un ensemble de restauration dentaire, ou un composant comme un capuchon de cicatrisation ou une prothèse dentaire. Le premier modèle tridimensionnel D1 comprend une représentation numérique de tous les éléments formant l'ensemble de restauration dentaire provisoire, notamment l'embase de pilier 1, le capuchon ou pilier ou zone de cicatrisation 10, et la prothèse 30. Ces éléments peuvent être assemblés ensemble, conformément à l'assemblage qui sera réalisé ultérieurement sur l'implant. S'agissant d'un élément standard, le modèle tridimensionnel de l'embase de pilier 1 est également standard et peut être récupéré dans une bibliothèque de données enregistrée dans une mémoire de l'ordinateur. Au moins le modèle tridimensionnel de la zone de cicatrisation est une représentation numérique sur-mesure, c'est-à-dire conçue pour s'intégrer parfaitement à l'implant, dans la gencive de la personne concernée et parmi une ou des dents adjacentes ou en en vis-à-vis.

Selon une approche essentielle de l'invention, au mois la zone de cicatrisation de l'ensemble de restauration dentaire provisoire est définie sur mesure, de manière unique et parfaitement adaptée à chaque individu traité. Il en ressort que cette zone de cicatrisation présente toujours une forme anatomique. La zone de cicatrisation peut être montée sur un pilier standard ou aussi conçu sur mesure. L'éventuelle prothèse provisoire est de même définie sur-mesure ou parmi des formes standardisées. On note que la section transverse de la zone de cicatrisation par un plan perpendiculaire à sa surface latérale présente une forme anatomique particulière.

Une telle section transverse, qui donne la forme finale à la gencive après cicatrisation est avantageusement de forme sensiblement trapézoïdale. En référence à la figure 23, elle comprend un grand côté 141, qui sera disposé du côté de l'extérieur de la bouche (côté vestibulaire), un petit côté 142 opposé parallèle, qui sera disposé du côté de l'intérieur de la bouche (côté lingual), reliés par deux côtés 143, 144. Le croisement des diagonales du trapèze permet de définir un centre 15. Avantageusement, ce centre est destiné à un alignement avec l'axe de l'implant 60.

La forme trapézoïdale de la section transverse peut varier, se rapprocher d'un triangle, si son petit côté 142 est très réduit. Le trapèze peut encore se rapprocher d'un rectangle, dont le grand côté va de l'extérieur de la bouche vers l'intérieur, et correspond aux côtés 143, 144. Au contraire, les trapèzes peuvent se rapprocher d'un rectangle, voire d'un carré, dont le grand côté est dans le sens inverse, et correspond aux côtés 141, 142, qui sont de longueur proches mais légèrement différentes. Naturellement, cette forme sensiblement trapézoïdale retenue présente des angles arrondis et des côtés courbés, pour garantir de ne pas heurter la gencive.

Selon une autre variante de réalisation, la section transverse pourrait s'approcher de tout polygone, comme un polygone à trois, cinq ou six côtés dont les dimensions seraient spécifiquement adaptées au milieu buccal du patient. En variante, les angles de ces polygones pourraient être si arrondis que la forme globale s'approcherait d'une forme oblongue, voire de section d'ovoïde, voire de toute autre forme plus éloignée d'un polygone.

Avantageusement, tout ou partie de l'ensemble de restauration dentaire provisoire ou définitif peut se trouver dans un matériau compatible avec un moyen de fabrication rapide, disponible dans le cabinet du praticien. Par exemple un élément de cicatrisation et/ou une prothèse peut être en matériau céramique ou en matériau plastique, compatible avec une utilisation médicale, et de couleur rose, blanche ou crème. En variante, il peut être en métal, par exemple en titane, ou peut être en zircone. Un élément de cicatrisation et/ou une prothèse peut être par exemple réalisé par usinage, notamment par fraisage tridimensionnel à partir d'un bloc de matériau ou encore par synthèse additive, c'est-à-dire par impression tridimensionnelle.

## Revendications

1. Procédé de fabrication d'un ensemble de restauration dentaire provisoire (100) destiné à être fixé au niveau d'une de ses extrémités sur un implant (60) dentaire intégré à une structure osseuse (62) d'un individu, **caractérisé en ce qu'**il comprend :
- une première étape (E1) de prise d'une première empreinte numérique (S1) d'un espace buccal de l'individu, destiné à accueillir l'ensemble de restauration dentaire provisoire (100), où la première étape (E1) de prise d'une première empreinte numérique (S1) comprend la prise d'une empreinte d'un espace buccal au-dessus d'un implant et
- une deuxième étape (E2) de construction d'un premier modèle tridimensionnel (D1) virtuel d'un ensemble de restauration dentaire provisoire (100) d'après la première empreinte numérique (S1), et
- une troisième étape (E3) de construction d'une base de données (D) comprenant des données numériques définissant le premier modèle tridimensionnel (D1) virtuel et une donnée d'identification (D2) de l'individu pour lequel l'ensemble de restauration dentaire provisoire réel correspondant au premier modèle tridimensionnel (D1) virtuel est destiné à être posé en bouche, et
- une quatrième étape (E4) de fabrication de l'ensemble de restauration dentaire provisoire (100) réel à partir du premier modèle tridimensionnel (D1) virtuel et à partir des données numériques de la base de données (D), par transmission des données numériques correspondantes à un dispositif de fabrication par enlèvement de matière et/ou par addition de matière.

2. Procédé de fabrication selon la revendication précédente, **caractérisé en ce que** la première étape (E1) de prise d'une première empreinte numérique (S1) d'un espace buccal comprend une numérisation du profil de la gencive complétée par une numérisation du même espace buccal réalisée après vissage sur un implant d'un composant de prise d'empreinte numérique (111).

3. Procédé de fabrication selon l'une des revendications précédentes, **caractérisé en ce que** la base de données (D) comprend des données numériques de plusieurs premiers modèles tridimensionnels (D1) virtuels d'ensembles de restauration dentaire provisoires (100), chacun étant associé à une donnée d'identification (D2), et **en ce que** chaque premier modèle tridimensionnel (D1) de la base de données (D) est conçu sur mesure et est unique, distinct des autres premiers modèles tridimensionnels (D1) de la base de données (D).

4. Procédé de fabrication selon l'une des revendications précédentes, **caractérisé en ce que** l'ensemble de restauration dentaire provisoire (100) comprend un élément de cicatrisation (10) pour gencive et/ou une prothèse dentaire (30).

5. Procédé de fabrication selon l'une des revendications précédentes, **caractérisé en ce que** l'ensemble de restauration dentaire provisoire (100) est monobloc ou constitué par plusieurs éléments, notamment comprenant une embase de pilier (1) destinée à être fixée d'une part à l'implant (60) et d'autre part à un capuchon de cicatrisation (10) ou à une prothèse dentaire (30), et/ou notamment comprenant un capuchon de cicatrisation (10) et une prothèse amovible ou un élément de numérisation monté de manière amovible ou non sur ledit capuchon de cicatrisation (10).

6. Procédé de fabrication selon l'une des revendications précédentes, **caractérisé en ce que** l'ensemble de restauration dentaire provisoire (100) comprend une zone de cicatrisation dont une section transverse présente une forme trapézoïdale ou polygonale.

## Patentansprüche

1. Verfahren zur Herstellung einer vorläufigen Zahnersatzanordnung (100) zur Befestigung, an einem ihrer Enden, auf einem Zahnimplantat (60), das in eine Knochenstruktur (62) einer Person integriert ist, **dadurch gekennzeichnet, dass** es Folgendes umfasst:
- einen ersten Schritt (E1) des Nehmens eines ersten digitalen Abdrucks (S1) eines Mundraums der Person, der dazu bestimmt ist, die vorläufige Zahnersatzanordnung (100) aufzunehmen, wobei der erste Schritt (E1) des Nehmens eines ersten digitalen Abdrucks (S1) das Nehmen eines Abdrucks eines Mundraums oberhalb eines Implantats umfasst, und
- einen zweiten Schritt (E2) des Erstellens eines ersten virtuellen dreidimensionalen Modells (D1) einer vorläufigen Zahnersatzanordnung (100) gemäß dem ersten digitalen Abdruck (S1), und
- einen dritten Schritt (E3) des Erstellens einer Datenbank (D) mit digitalen Daten, die das erste virtuelle dreidimensionale Modell (D1) und ein Datenelement zur Identifikation (D2) der Person definieren, für welche die reelle vorläufige Zahnersatzanordnung, die dem ersten virtuellen dreidimensionalen Modell (D1) entspricht, im Mund eingesetzt werden soll, und
- einen vierten Schritt (E4) des Herstellens der reellen vorläufigen Zahnersatzanordnung (100) anhand des ersten virtuellen dreidimensionalen Modells (D1) und anhand der digitalen Daten der Datenbank (D) durch Übertragung der entsprechenden digitalen Daten an eine Vorrichtung zur Herstellung durch Entfernen von Material und/oder Hinzufügen von Material.

2. Herstellungsverfahren nach dem vorhergehenden Anspruch, **dadurch gekennzeichnet, dass** der erste Schritt (E1) des Nehmens eines ersten digitalen Abdrucks (S1) eines Mundraums eine Digitalisierung des Profils des Zahnfleischs umfasst, die durch eine Digitalisierung desselben Mundraums ergänzt wird, die nach Aufschrauben einer Komponente zum Nehmen eines digitalen Abdrucks (111) auf ein Implantat vorgenommen wird.

3. Herstellungsverfahren nach einem der vorhergehenden Ansprüche, **dadurch gekennzeichnet, dass** die Datenbank (D) digitale Daten von mehreren ersten virtuellen dreidimensionalen Modellen (D1) von vorläufigen Zahnersatzanordnungen (100) umfasst, wobei jedes einem Identifikationsdatenelement (D2) zugeordnet ist, und dadurch, dass jedes erste dreidimensionale Modell (D1) der Datenbank (D) nach Maß entworfen und einmalig ist, verschieden von den anderen ersten dreidimensionalen Modellen (D1) der Datenbank (D).

4. Herstellungsverfahren nach einem der vorhergehenden Ansprüche, **dadurch gekennzeichnet, dass** die vorläufige Zahnersatzanordnung (100) ein Zahnfleisch-Einheilungselement (10) und/oder eine Zahnprothese (30) umfasst.

5. Herstellungsverfahren nach einem der vorhergehenden Ansprüche, **dadurch gekennzeichnet, dass** die vorläufige Zahnersatzanordnung (100) einstückig oder von mehreren Elementen gebildet ist, die insbesondere eine Basis eines Pfostens (1) zur Befestigung einerseits am Implantat (60) und andererseits an einer Einheilkappe (10) oder an einer Zahnprothese (30) umfassen, und/oder insbesondere eine Einheilkappe (10) und eine herausnehmbare Prothese oder ein Digitalisierungselement, das herausnehmbar an der Einheilkappe (10) angebracht ist oder nicht, umfassen.

6. Herstellungsverfahren nach einem der vorhergehenden Ansprüche, **dadurch gekennzeichnet, dass** die vorläufige Zahnersatzanordnung (100) einen Einheilungsbereich umfasst, von dem ein Querschnitt eine Trapez- oder Vieleckform aufweist.

## Claims

1. Method for manufacturing a temporary dental restoration assembly (100) intended to be attached, at one of its ends, to a dental implant (60) integrated in a bone structure (62) of an individual, **characterized in that** it comprises:
- a first step (E1) of taking a first digital impression (S1) of an oral space of the individual, intended to receive the temporary dental restoration assembly (100), where the first step (E1) of taking a first digital impression (S1) comprises taking an impression of an oral space above an implant, and
- a second step (E2) of constructing a first three-dimensional virtual model (D1) of a temporary dental restoration assembly (100) according to the first digital impression (S1), and
- a third step (E3) of constructing a database (D) comprising digital data defining the first three-dimensional virtual model (D1) and an item of identification data (D2) of the individual in whose mouth the actual temporary dental restoration assembly corresponding to the first three-dimensional virtual model (D1) is intended to be placed, and
- a fourth step (E4) of manufacturing the actual temporary dental restoration assembly (100) from the first three-dimensional virtual model (D1) and on the basis of the digital data of the database (D), by transmitting the corresponding digital data to a device for manufacture by removal of material and/or by addition of material.

2. Manufacturing method according to the preceding claim, **characterized in that** the first step (E1) of taking a first digital impression (S1) of an oral space comprises digitization of the profile of the gingiva, supplemented by digitization of the same oral space after a component (111) for taking a digital impression has been screwed onto an implant.

3. Manufacturing method according to one of the preceding claims, **characterized in that** the database (D) comprises digital data of several first three-dimensional virtual models (D1) of temporary dental restoration assemblies (100), each being associated with an item of identification data (D2), and **in that** each first three-dimensional model (D1) of the database (D) is customdesigned and unique, distinct from the other first three-dimensional models (D1) of the database (D).

4. Manufacturing method according to one of the preceding claims, **characterized in that** the temporary dental restoration assembly (100) comprises a gingival healing element (10) and/or a dental prosthesis (30).

5. Manufacturing method according to one of the preceding claims, **characterized in that** the temporary dental restoration assembly (100) is in one piece or is composed of several elements, comprising in particular an abutment base (1) intended to be attached on the one hand to the implant (60) and on the other hand to a healing cap (10) or to a dental prosthesis (30), and/or comprising in particular a healing cap (10) and a removable prosthesis or a digitization element mounted removably or non-removably on said healing cap (10).

6. Manufacturing method according to one of the preceding claims, **characterized in that** the temporary dental restoration assembly (100) comprises a healing zone whose transverse section has a trapezoidal or polygonal shape.
